# EUROPÄISCHE PATENTSCHRIFT

(11) **EP 3 875 017 B1**
(45) Veröffentlichungstag und Bekanntmachung des Hinweises auf die Patenterteilung: **03.01.2024**
(21) Anmeldenummer: 21158678.9
(22) Anmeldetag: 23.02.2021
(51) Int. Cl.: A47L 15/42, D06F 39/14

(54) **WASSERFÜHRENDES HAUSHALTSGERÄT MIT EINER SCHALTBAREN AUTOMATISCHEN ODER MANUELLEN TÜRÖFFNUNGSANORDNUNG**
WATER-CONDUCTING HOUSEHOLD APPLIANCE WITH A SWITCHABLE AUTOMATIC OR MANUAL DOOR OPENING MECHANISM
APPAREIL ÉLECTROMÉNAGER À CIRCULATION D'EAU AVEC UN MÉCANISME D'OUVERTURE DE PORTE AUTOMATIQUE OU MANUELLE COMMUTABLE

(30) Priorität: 02.03.2020 DE 102020105533; 20.03.2020 DE 102020107758; 03.04.2020 DE 102020109318
(43) Veröffentlichungstag der Anmeldung: 08.09.2021
(73) Patentinhaber: Miele & Cie. KG, 33332 Gütersloh (DE)
(72) Erfinder: Kröger, Günter, 32369 Rahden (DE); Wegener, Dirk, 33649 Bielefeld (DE); Marks, Volker, 33611 Bielefeld (DE)

(56) Entgegenhaltungen:
- EP-A1- 0 541 974
- DE-A1-102017 218 501
- DE-A1-102018 008 895
- US-A1- 2019 040 670

## Beschreibung

Die Erfindung betrifft ein Haushaltsgerät, insbesondere ein wasserführendes Haushaltsgerät, wie zum Beispiel eine Geschirrspülmaschine, mit einem einen Geräteraum bereitstellenden Gerätegehäuse, das für einen Zugriff auf den Geräteraum eine Beschickungsöffnung aufweist, mit einer um eine Schwenkachse verdrehbar gelagerten Gerätetür für einen Verschluss der Beschickungsöffnung, mit einer Motoreinheit, mittels welcher die Gerätetür aus einer Offenstellung in eine die Beschickungsöffnung verschließende Verschlussstellung überführbar ist, und mit einer Federmechanik, die einem Gewichtsausgleich der Gerätetür dient und ein Federelement sowie ein zwischen Federelement und Gerätetür angeordnetes Kraftübertragungsmittel aufweist, das mit einem von der Motoreinheit antreibbaren Zwischenglied in Wirkverbindung steht.

Haushaltsgeräte im Allgemeinen sowie wasserführende Haushaltsgeräte im Speziellen sind aus dem Stand der Technik an sich gut bekannt, weshalb es eines gesonderten druckschriftlichen Nachweises an dieser Stelle nicht bedarf. Es sei deshalb auch nur beispielhaft auf die DE 10 2017 218 493 A1 verwiesen, die ein gattungsgemäßes Haushaltsgerät in der Ausgestaltung einer Geschirrspülmaschine offenbart.

Ein Haushaltsgerät im Sinne der Erfindung ist insbesondere ein wasserführendes Haushaltsgerät, wie zum Beispiel eine Geschirrspülmaschine, eine Waschmaschine und/oder ein Trockner. Unter dem Begriff "Haushaltsgerät" fallen aber auch Kühlschränke, Backöfen, Dampfgarer, Mikrowellen und/oder dergleichen.

Ein gattungsgemäßes Haushaltsgerät verfügt über ein Gerätegehäuse, das einen Geräteraum bereitstellt. Für einen verwenderseitigen Zugriff auf den Geräteraum weist das Gerätegehäuse eine Beschickungsöffnung auf. Für einen Verschluss der Beschickungsöffnung im Verwendungsfall des Haushaltsgeräts ist eine Gerätetür vorgesehen, die um eine Schwenkachse verschwenkbar am Gerätegehäuse angeordnet ist. Im bestimmungsgemäßen Verwendungsfall kann die Gerätetür verwenderseitig aus einer Offenstellung in eine die Beschickungsöffnung verschließende Verschlussstellung und umgekehrt überführt werden. Der Verschluss der Beschickungsöffnung durch die Gerätetür in Verschlussstellung ist im Falle eines wasserführenden Haushaltsgeräts bevorzugterweise fluiddicht.

Um zumindest eine Verschwenkbewegung der Gerätetür aus einer Offenstellung in eine die Beschickungsöffnung verschließende Verschlussstellung zu vereinfachen, ist aus der DE 10 2017 218 493 A1 die Verwendung einer Motoreinheit bekannt, die in Wirkverbindung mit der Gerätetür steht. Dabei gestattet es die Motoreinheit, die Gerätetür nach einer vorherigen verwenderseitigen Aktivierung der Motoreinheit, aus einer Offenstellung in eine die Beschickungsöffnung verschließende Verschlussstellung zu überführen, und dies ohne weiteren manuellen Eingriff durch den Verwender.

Die US 2019/040670 A1 offenbart ebenfalls ein Haushaltsgerät mit einem einen Geräteraum bereitstellenden Gerätegehäuse, das für einen Zugriff auf den Geräteraum eine Beschickungsöffnung aufweist, mit einer um eine Schwenkachse verdrehbar gelagerten Gerätetür für einen Verschluss der Beschickungsöffnung, mit einer Motoreinheit, mittels welcher die Gerätetür aus einer Offenstellung in eine die Beschickungsöffnung verschließende Verschlussstellung überführbar ist.

Die Konstruktion nach der DE 10 2017 218 493 A1 verfügt in an sich bekannter Weise über eine Federmechanik, die einem Gewichtsausgleich der Gerätetür dient. Diese Federmechanik verfügt über ein Federelement einerseits sowie über ein Kraftübertragungsmittel andererseits.

Das Federelement ist als Schraubenfeder ausgebildet und einendseitig am Gerätegehäuse angelenkt. Anderendseitig ist am Federelement das Kraftübertragungsmittel angeordnet, das im Falle der DE 10 2017 218 493 A1 ein Seilzug ist. Dieser Seilzug steht mit seinem dem Federelement abgewandten Ende kraftübertragend mit der Gerätetür in Verbindung, zu welchem Zweck die Gerätetür einen Hebel aufweist, an welchem der Seilzug endseitig angeordnet ist. Es sind zudem zwei Umlenkrollen vorgesehen, um die herum der Seilzug geführt ist.

Bei einem Öffnen der Gerätetür wird über den Seilzug das Federelement auf Zug beansprucht. Es dehnt sich infolge dessen aus. In der Konsequenz wird das Gewicht der Gerätetür abgefangen, so dass die Gerätetür auch in halb geöffneter Stellung ohne weiteren manuellen Eingriff verbleiben kann und nicht etwa beispielsweise infolge einer Fehlbedienung unkontrolliert aufklappen kann. Bei vollständig geöffneter Gerätetür ist das Federelement maximal gespannt, so dass sich bei einem Schließen der Gerätetür das Federelement wieder zusammenziehen und so eine Schließbewegung der Gerätetür unterstützen kann. Insgesamt ergibt sich so eine für den Verwender vereinfachte Handhabung sowohl beim Öffnen als auch beim Schließen der Gerätetür.

Die nach der DE 10 2017 218 493 A1 vorgesehene Motoreinheit zur motorunterstützen Überführung der Gerätetür aus einer Offenstellung in eine Verschlussstellung treibt eine der beiden Umlenkrollen an, um die herum der Seilzug der Federmechanik geschlungen ist. Es besteht dabei Reibschluss zwischen der Umlenkrolle und dem Seilzug, der in allen möglichen Stellungen der Gerätetür dadurch aufrechterhalten ist, dass das Federelement der Federmechanik auf den Seilzug einwirkt, womit sichergestellt ist, dass der Seilzug straff um die Umlenkrolle herumgeführt ist.

Im bestimmungsgemäßen Betriebsfall der Motoreinheit führt der Reibschluss zwischen Umlenkrolle und Seilzug dazu, dass die von der Motoreinheit in Drehbewegung versetzte Umlenkrolle eine gerätetürseitige Zugbeanspruchung des Seilzuges mit der Folge bewirkt, dass die Gerätetür in Richtung ihrer Verschlussstellung verschwenkt. Dabei hat diese Konstruktion den Vorteil eines Klemmschutzes, da die motorangetriebene Rolle im Falle einer Blockade der Gerätetür durchdrehen kann, es also zu einem Schlupf zwischen Umlenkrolle und Seilzug kommt.

Der mit der DE 10 2017 218 493 A1 realisierte Klemmschutz ist aber in nachteiliger Weise hinsichtlich seines Auslösemoments sehr unpräzise und darüber hinaus in seiner Funktionsweise von der Stellung der Gerätetür abhängig.

Die nach der DE 10 2017 218 493 A1 vorgesehene Umlenkrolle überträgt die Antriebsenergie nur aufgrund der zwischen ihr und dem sie umschlingenden Seilzug wirkenden Reibkraft. Diese Reibkraft hängt maßgeblich von der Seilzug-Vorspannung ab, die mit der Stellung der Gerätetür variiert. Denn das Federelement der Federmechanik ist bei vollständig geöffneter Gerätetür maximal ausgelenkt, was folglich zu einer maximalen Vorspannung des Seilzuges führt. Diese Vorspannung nimmt bei einer Bewegung der Gerätetür in Richtung ihrer Verschlussstellung stetig ab und erreicht schließlich ihr Minimum, wenn nämlich das Federelement maximal entspannt ist. Hieraus resultiert, dass der eigentlich gewollte Sicherheitsvorteil im Blockadefall und der Schutz der Motoreinheit türstellungsabhängig sind. Hinzu kommt, dass der Seilzug konstruktionsbedingt einem Verschleiß ausgesetzt ist, womit sich auch über die Lebensdauer des Haushaltsgeräts deutliche Unterschiede im Ansprechverhalten des Einklemmschutzes ergeben.

Es ist ausgehend vom Vorbeschriebenen die **Aufgabe** der Erfindung, ein Antriebskonzept zur motorischen Bewegung der Gerätetür vorzuschlagen, das für einen reproduzierbaren Bewegungsablauf der Gerätetür unabhängig vom Türgewicht und einer Vorspannung des Federelements der Federmechanik sorgt.

Zur **Lösung** dieser Aufgabe wird mit der Erfindung ein Haushaltsgerät mit den Merkmalen von Anspruch 1 vorgeschlagen.

In Abkehr zum vorbekannten Stand der Technik kommen ein Kraftübertragungsmittel und ein Zwischenglied zum Einsatz, die nicht reibschlüssig, sondern formschlüssig miteinander zusammenwirken. Dabei ergibt sich aufgrund des Formschlusses der Vorteil, dass sich ein abhängig von Türstellung und/oder Federvorspannung ergebender Schlupf zwischen Kraftübertragungsmittel und Zwischenglied vermieden ist. Die erfindungsgemäße Ausgestaltung ermöglicht es deshalb, die Gerätetür sicher und unabhängig von Türgewicht und Türposition über den gesamten Schwenkbereich verfahren zu können.

Von Vorteil der erfindungsgemäßen Konstruktion ist zudem, dass die aus dem Stand der Technik an sich bekannte, zum Ausgleich des Türgewichtes eingesetzte Federmechanik nahezu unverändert eingesetzt werden kann. Denn es kommen lediglich anstelle eines Seilzuges ein Kraftübertragungsmittel und ein korrespondierend hierzu ausgebildetes Zwischenglied zum Einsatz. Im Übrigen bleibt die Konstruktion aber unverändert, insbesondere hinsichtlich des Federelements und der gerätetürseitigen Ausrüstung zur Anbindung des Kraftübertragungsmittels.

Der nach der Erfindung vorgesehene Formschluss zwischen Kraftübertragungsmittel und Zwischenglied verhindert einen Schlupf zwischen Kraftübertragungsmittel und Zwischenglied. Es besteht insofern kein Einklemmschutz. Dieser Nachteil wird bewusst in Kauf genommen, da der Vorteil überwiegt, die Gerätetür unabhängig von Türgewicht und Türposition über den gesamten Schwenkbereich reproduzierbar und sicher verschwenken zu können. Denn dies gestattet eine Verwendung der erfindungsgemäßen Konstruktion gleichsam für unterschiedliche Baugrößen und -gewichte von Gerätetüren, was einen universellen Einsatz in unterschiedlichen Baureihen und Gerätetypen ermöglicht.

Gemäß der Erfindung ist vorgesehen, dass das Kraftübertragungsmittel ein Zahnriemen oder eine Kette ist. Anstelle eines Seilzuges findet mithin ein Zahnriemen oder eine Kette Verwendung, wobei aus Gründen der verminderten Geräuschentwicklung ein Zahnriemen bevorzugt ist.

Die Verwendung eines Zahnriemens zum Antrieb einer Gerätetür ist aus dem Stand der Technik an sich nicht unbekannt. So offenbart beispielsweise die EP 0 541 974 A1 ein Haushaltsgerät in der Ausgestaltung einer Geschirrspülmaschine, die zur Türbetätigung unter anderem über einen elektromotorischen Antrieb und ein Verstellgetriebe verfügt, wobei das Verstellgetriebe einen endlos umlaufenden Zahnriemen aufweist. Allerdings ist auch bei dieser vorbekannten Konstruktion das Kraftübertragungsmittel zwischen Federelement und Gerätetür ein Seilzug, so wie dies aus der gattungsbildenden DE 10 2017 218 493 A1 vorbekannt ist.

Der Seilzug nach der EP 0 541 974 A1 verfügt über einen starren Seilzugabschnitt, an dem ein Gegenmitnehmer festgesetzt ist. Der hierzu korrespondierende Mitnehmer ist an dem in Form eines Zahnriementriebs ausgebildeten Endlosriementrieb angeordnet. Im bestimmungsgemäßen Verwendungsfall erfolgt ein Antrieb des Endlosriementriebs durch den elektromotorischen Antrieb, infolgedessen es zu einem Einklinken des Mitnehmers in den Gegenmitnehmer kommt, was zu einer Betätigung des Seilzugs und damit zu einer Türbewegung führt.

Im Unterschied zur EP 0 541 974 A1 ist mit der erfindungsgemäßen Ausgestaltung vorgesehen, das Kraftübertragungsmittel selbst als Zahnriemen oder Kette auszubilden, d. h. anstelle eines Seilzugs zur kraftübertragenden Verbindung zwischen Federelement und Gerätetür einen Zahnriemen vorzusehen. Dabei ist der Zahnriemen auch nicht als Endlosriemen ausgeführt. Er verbindet das Federelement vielmehr direkt mit der Gerätetür, wobei der Zahnriemen einendseitig am Federelement und anderendseitig an der Gerätetür angelenkt ist.

Im bestimmungsgemäßen Verwendungsfall dient zum Antrieb des Zahnriemens die Motoreinheit, und zwar unter Zwischenordnung des Zwischengliedes, das mit dem Zahnriemen formschlüssig ineinandergreift. Dabei wird der Zahnriemen nicht endlos als Zahnriementrieb geführt, sondern zum Zwecke einer Gerätetürschließung in Richtung des Federelements bewegt. Eine Gerätetüröffnung erfolgt manuell, wobei in diesem Fall der Zahnriemen in die im Vergleich zur Türschließung entgegengesetzte Richtung bewegt wird, was eine Auslenkung des Federelements bewirkt.

Gemäß einem weiteren Merkmal der Erfindung ist vorgesehen, dass das Zwischenglied ein zum Zahnriemen oder zur Kette korrespondierend ausgebildetes Zahnrad ist. Es kommt mithin eine Umlenkrolle zum Einsatz, die zahnriemen- bzw. kettenseitig über eine Zahnstruktur verfügt, die mit dem Zahnriemen, der Kette und/oder dergleichen im bestimmungsgemäßen Verwendungsfall kämmt. Es ist so eine schlupffreie, formschlüssige Verbindung zwischen dem Kraftübertragungsmittel und dem Zwischenglied gegeben.

Gemäß einem weiteren Merkmal der Erfindung ist vorgesehen, dass der Zahnriemen das Federelement mit einem Anlenkhebel der Gerätetür unmittelbar verbindet. Demnach ist der Zahnriemen direkt an dem Federelement einerseits und am zugehörigen Anlenkhebel der Gerätetür andererseits angeordnet. Im bestimmungsgemäßen Verwendungsfall ist so unter Zwischenschaltung des Zahnriemens eine direkte Kraftübertragung von dem Federelement auf die Gerätetür und umgekehrt vorgesehen.

Von Vorteil dieser Ausgestaltung ist zum einen, dass der Zahnriemen stets in optimierter Weise mittels des Federelements vorgespannt ist. Dies hilft sicher ein ungewolltes Durchdrehen des beispielsweise als Zahnrad ausgebildeten Zwischenglieds zu vermeiden. Zum anderen ist insbesondere im Unterschied zur EP 0 541 974 A1 eine kompakte Bauform gegeben. So ist es nach der Konstruktion der EP 0 541 974 A1 erforderlich, den hier beschriebenen Zahnriemen sowie den hier beschriebenen Seilzug zumindest abschnittsweise parallel zu führen. Dies erfordert entsprechend viel Einbauraum, weshalb das Federelement nach der EP 0 541 974 A1 auch nicht horizontal, sondern vertikal ausgerichtet ist.

Gegenüber der EP 0 541 974 A1 ergibt sich mit der erfindungsgemäßen Ausgestaltung zudem der Vorteil einer mitnehmerfreien Konstruktion. Denn die erfindungsgemäße Ausgestaltung ermöglicht es, dass die Wirkverbindung zwischen Motor und Zahnriemen allein durch ein Zahnrad realisiert ist. Dieses steht mit dem Zahnriemen in formschlüssiger Verbindung, so dass im bestimmungsgemäßen Verwendungsfall durch motorischen Antrieb des Zahnrades eine Zahnriemenbewegung realisiert ist. Ein- bzw. ausklinkbare Mitnehmer bzw. Gegenmitnehmer, wie diese nach der Konstruktion der EP 0 541 974 A1 vorgesehen sind, bedarf es deshalb nicht, was ebenfalls zu einer kompakteren Bauform beiträgt. Es ist gemäß einem weiteren Merkmal der Erfindung eine zwischen Motoreinheit und Gerätetür angeordnete Kupplungseinrichtung vorgesehen, die antriebsseitig mit der Motoreinheit und abtriebsseitig mit der Gerätetür in Wirkverbindung steht. Diese Kupplungseinrichtung kann beispielsweise dem Einklemmschutz dienen und/oder die Unterscheidung zwischen einer manuellen Türschließung und einer motorangetriebenen Türschließung ermöglichen. Dem Nachteil des fehlenden Schlupfes ist damit begegnet.

Es ist in diesem Zusammenhang gemäß einem weiteren Merkmal der Erfindung vorgesehen, dass die Kupplungseinrichtung eine Kupplung aufweist, die schaltbar ausgebildet ist und aus einer ersten entkuppelten Stellung in eine gekuppelte Stellung und umgekehrt überführbar ist, wobei die Kupplung eingerichtet ist, im Betriebsfall der Motoreinheit eine automatische Schaltung aus der entkuppelten Stellung in die gekuppelte Stellung zu bewirken.

Das erfindungsgemäße Haushaltsgerät verfügt über eine Kupplungseinrichtung mit einer Kupplung, die schaltbar ausgebildet ist. Dabei kann die Kupplung aus einer entkuppelten Stellung in eine gekuppelte Stellung und umgekehrt überführt werden. In der entkuppelten Stellung ist die Wirkverbindung zwischen der Motoreinheit und der Gerätetür unterbrochen, was eine manuelle Betätigung der Gerätetür ermöglicht, und zwar ohne eine durch die Motoreinheit bedingte Schwergängigkeit. Denn dank der Entkupplung dreht die Motoreinheit infolge einer manuellen Verschwenkung der Gerätetür nicht mit.

Befindet sich die Kupplung indes in gekuppelter Stellung, so ist die Wirkverbindung zwischen Motoreinheit und Gerätetür geschlossen, so dass ein Antrieb der Gerätetür durch die Motoreinheit erfolgen kann.

Die erfindungsgemäße Ausgestaltung ermöglicht es mithin in Abkehr zur DE 10 2017 218 493 A1 zwischen einer manuellen Türbetätigung einerseits und einer motorangetriebenen Türbetätigung andererseits unterscheiden zu können.

Erfindungsgemäß ist des Weiteren vorgesehen, dass die Kupplung eingerichtet ist, im Betriebsfall der Motoreinheit eine automatische Schaltung aus der entkuppelten Stellung in die gekuppelte Stellung zu bewirken. Die mit der Kupplungseinrichtung vorgesehene Kupplung sorgt mithin dafür, dass es bei einer Aktivierung der Motoreinheit zu einer automatischen Schaltung der Kupplung kommt, wobei diese aus der entkuppelten Stellung in die gekuppelte Stellung überführt wird.

Die Kupplung befindet sich mithin grundsätzlich in entkuppelter Stellung, was eine manuelle Türbetätigung ermöglicht. Soll nun insbesondere zum Überführen der Gerätetür in die Verschlussstellung kein manuelles, sondern ein motorangetriebenes Betätigen der Gerätetür stattfinden, so bedarf es hierfür keiner separaten Schaltung der Kupplung. Denn diese schaltet automatisch, wird also automatisch in die gekuppelte Stellung überführt, sobald der Betriebsfall der Motoreinheit einsetzt, d.h. die Motoreinheit verwenderseitig gestartet wird.

Diese erfindungsgemäße Einrichtung der Kupplung erbringt im Wesentlichen zwei Vorteile. Zum einen ist die verwenderseitig gegebene Möglichkeit geschaffen, zwischen einem manuellen und einem motorangetriebenen Antrieb der Gerätetür wahlweise unterscheiden zu können. Insbesondere ist es möglich, die Gerätetür entweder manuell oder motorangetrieben in ihre Verschlussstellung zu überführen. Des Weiteren ermöglicht es die erfindungsgemäße Kupplungsausgestaltung, dass ein motorangetriebener Schließvorgang der Gerätetür auch manuell unterstützt, insbesondere zur Beschleunigung des Schließvorgangs auch manuell zu Ende geführt werden kann. Dabei wird zur Einkupplung oder Auskupplung der Kupplung keine weitere Aktorik benötigt. Dies ergibt sich allein in Abhängigkeit eines bestimmungsgemäßen Betriebs der Motoreinheit.

Die Gerätetüren vorbekannter Haushaltsgeräte werden typischerweise per Hand bedient, und zwar sowohl hinsichtlich eines Öffnens als auch hinsichtlich eines Schließens. Es ist gewünscht, dass Gerätetüren auch motorisch verfahren werden können, insbesondere zum Zwecke der Schließung. Für die Auslösung eines solchen Motorbetriebs können beispielsweise Sensoren am Gerät vorgesehen sein, so dass ein Verwender durch eine einfache Bewegung mit der Hand oder dem Fuß den Motorbetrieb auslösen und somit eine automatische Türschließung einleiten kann.

Die Konstruktion der DE 10 2017 218 493 A1 hat allerdings den Nachteil, dass eine manuelle Türöffnung immer entgegen der Motorkraft des in Wirkverbindung mit der Gerätetür stehenden Motors zu erfolgen hat. Auch bei stillstehendem Motor muss immer die Motorwelle mitbewegt werden, was entsprechenden Kraftaufwand bei einem manuellen Öffnen erforderlich macht. Die erfindungsgemäße Konstruktion schafft hier Abhilfe, da sich die Kupplung grundsätzlich in entkuppelter, d.h. ausgekuppelter Stellung befindet, so dass ein manuelles Öffnen der Tür nicht zu einem Mitverdrehen der Motorwelle der Motoreinheit führt. Bei einem nachfolgenden Schließen der Gerätetür durch Motorkraft erfolgt ohne weiteres Hinzutun durch den Verwender ein automatisches Einkuppeln der Kupplung, d.h. ein Überführen der Kupplung in die gekuppelte Stellung allein aufgrund des sich nach vorheriger Aktivierung drehenden Motors. Dies ermöglicht eine verwenderseitig einfache Handhabung ohne zusätzliche Aktuatoren zur Betätigung der Kupplung.

Der erfindungsgemäße Clou besteht insbesondere darin, dass die Kupplung nur dann kuppelt, wenn die Motoreinheit in Drehbewegung ist. Es ist mithin eine Art Freilaufkupplung gegeben. Wenn ein manueller Betrieb stattfindet, die Motoreinheit also nicht aktiv ist, greift die Kupplung nicht, so dass ein vom Motor losgekuppelter Betrieb möglich ist. Sobald sich aber der Verwender dafür entscheidet, wahlweise den Motorbetrieb einzuschalten, greift die Kupplung, so dass dann ein motorisches Verfahren erfolgt.

Gemäß einem besonderen Merkmal der Erfindung ist vorgesehen, dass die Kupplung ein verdrehfest auf einer Motorwelle der Motoreinheit angeordnetes Drehteil aufweist, das ein um eine Schwenkachse verdrehbar daran angeordnetes Klemmstück trägt. Die Kupplung verfügt mithin über ein Drehteil. Dieses sitzt auf der Motorwelle der Motoreinheit, und zwar verdrehfest. Bei einer motorangetriebenen Verdrehbewegung der Motorwelle kommt es mithin auch zu einem Verdrehen des Drehteils, und zwar um die von der Motorwelle bereitgestellte Drehachse der Motoreinheit.

Das Drehteil trägt ferner ein Klemmstück, das um eine Schwenkachse verdrehbar am Drehteil angeordnet ist. Bevorzugterweise sind zwei solcher Klemmstücke vorgesehen. Diese können jeweils in Relation zum Drehteil verdrehen, und zwar in einer in Relation zum Drehteil radialen Richtung aus einer eingefahrenen Stellung in eine ausgefahrene Stellung und umgekehrt.

Gemäß einem weiteren Merkmal der Erfindung ist vorgesehen, dass das Klemmstück mit einem schwenkachsenentfernten Endabschnitt mit einer von einem Führungsmittel bereitgestellten Kulissenführung zusammenwirkt. Diese Kulissenführung des Führungsmittels bedingt im Betriebsfall ein Verschwenken des damit zusammenwirkenden Klemmstücks in radialer Richtung zum Drehteil. Zu diesem Zweck kann das Klemmstück in seinem schwenkachsenentfernten Endabschnitt über einen in die Kulissenführung des Führungsmittels eingreifenden Zapfen verfügen. Kommt es nun zu einer Verdrehbewegung des Drehteils, so verdreht das Klemmstück einerseits zusammen mit dem Drehteil, und zwar um die Drehachse des Drehteils. Gleichzeitig vollführt das Klemmstück in Relation zum Drehteil eine Verschwenkbewegung um die eigene Schwenkachse, und zwar infolge der Führung des schwenkachsenentfernten Zapfens des Klemmstücks in der zugehörigen Kulissenführung des Führungsmittels.

Gemäß einem weiteren Merkmal der Erfindung ist vorgesehen, dass das Führungsmittel auf einem von der Motorwelle durchragten Lagerbund unter Ausbildung eines Reibsitzes verdrehbar gelagert ist.

Durch die Ausbildung des Reibsitzes auf dem Lagerbund ist sichergestellt, dass das Führungsmittel reibbelastet nicht mitverdreht, wenn das Drehteil verdreht, das vom Drehteil getragene Klemmstück aber noch nicht in seine in Relation zum Drehteil ausgelangte Endposition verfahren ist. Bis zur Erreichung dieser Endposition steht das Führungsmittel in Relation zum Drehteil still, was die Führung des schwenkachsenentfernten Endabschnittes des Klemmstückes entlang der zugehörigen Kulissenführung ermöglicht.

Sobald das Klemmstück in Relation zum Drehteil in seine Endposition verschwenkt ist, nimmt es das Führungsmittel mit, so dass dieses zusammen mit dem Drehteil unter mechanischer Zwischenordnung des Klemmstücks mitverdreht. Um dies zu ermöglichen, ist das Führungsmittel auf dem Lagerbund verdrehbar gelagert. Die Ausbildung des Reibsitzes zwischen Lagerbund und Führungsmittel verhindert mithin nicht eine Mitnahmeverdrehbewegung des Führungsmittels, sondern stellt lediglich sicher, dass eine Verdrehbewegung des Klemmstücks in Relation zum Drehteil stattfindet, bis das Klemmstück seine in Entsprechung der Kulissenführung vorgegebene Endposition erreicht hat.

Gemäß einem weiteren Merkmal der Erfindung ist vorgesehen, dass die Kupplung ein das Drehteil zumindest teilweise aufnehmendes Kupplungsgehäuse aufweist, das eine mit dem Klemmstück zusammenwirkende Innenkontur aufweist. Das Drehteil ist zumindest abschnittsweise innerhalb eines Kupplungsgehäuses angeordnet. Bei einem nicht in Relation zum Drehteil verschwenkten Klemmstück ist das Drehteil gegenüber dem Kupplungsgehäuse frei verdrehbar. Eine Kraftübertragung zwischen Drehteil und Kupplungsgehäuse findet mithin nicht statt.

Das Kupplungsgehäuse weist eine Innenkontur auf, die mit dem Klemmstück zusammenwirkt. Dabei greift das Klemmstück in die Innenkontur des Kupplungsgehäuses ein, sobald sich das Klemmstück in Relation zum Drehteil verschwenkt hat und sich in seiner ausgefahrenen Endposition befindet. In dieser Position des Klemmstücks findet vorzugsweise ein Formschluss zwischen Klemmstück und Innenkontur des Kupplungsgehäuses statt, so dass mittels des Klemmstücks eine Drehmomentübertragung vom Drehteil auf das Kupplungsgehäuse stattfindet. In dieser Position des Klemmstücks ist die Kupplung eingekuppelt, befindet sich also in ihrer gekuppelten Stellung, so dass eine Kraftübertragung von dem motorangetriebenen Drehteil auf das Kupplungsgehäuse stattfinden kann.

Gemäß einem weiteren Merkmal der Erfindung ist vorgesehen, dass die Innenkontur eine zum schwenkachsenentfernten Endabschnitt des Klemmstücks korrespondierend ausgebildete Aufnahmenut, oder -mulde aufweist, In diese Aufnahmenut greift das Klemmstück unter Ausbildung eines Formschlusses ein, wenn sich das Klemmstück in Relation zum Drehteil verschwenkt hat und sich in seiner Endposition befindet. So lange diese Position des Klemmstücks noch nicht erreicht ist, dreht das Drehteil gegenüber dem Kupplungsgehäuse durch, so dass keine Kraftübertragung von der Motoreinheit auf das Kupplungsgehäuse stattfinden kann. Erst wenn das Klemmstück formschlüssig in die zugehörige Aufnahmemulde des Kupplungsgehäuses eingreift, ist ein Kraftschluss gegeben, so dass ein Motordrehmoment auf das Kupplungsgehäuse übertragen werden kann.

Gemäß einem weiteren Merkmal der Erfindung ist vorgesehen, dass das Kupplungsgehäuse eine Abtriebswelle bereitstellt. Diese steht in Wirkverbindung mit dem Zahnrad, so dass bei eingekuppelter Kupplung ein Motorantrieb des Zahnrads und damit auch des Zahnriemens stattfinden kann.

Die Konstruktion der vorbeschriebenen Kupplung gestattet es, dass ein automatisches Schalten der Kupplung stattfindet, sobald die Motoreinheit anfährt. Denn ein Betrieb der Motoreinheit bedingt, dass sich das Drehteil der Kupplung verdreht, und damit auch eine Verdrehung des Klemmstücks in Relation zum Drehteil stattfindet. Sobald das Drehteil um einen gewissen Winkelbetrag um die durch die Motorwelle bereitgestellte Drehachse der Motoreinheit verdreht ist, hat das Klemmstück seine gegenüber dem Drehteil verdrehte Endposition erreicht und greift in eine zugehörige Aufnahmemulde des Kupplungsgehäuses ein. Hierdurch bedingt ist Kraftschluss gegeben, so dass ein Übertrag des motorgenerierten Drehmoments auf das Kupplungsgehäuse und damit auf die Antriebswelle und schlussendlich auf das damit gekoppelte Zahnrad stattfindet.

Wird nun trotz motorangetriebener Schließung der Gerätetür manuell nachgeholfen, indem verwenderseitig die Gerätetür manuell nachgeführt wird, so verdreht je nach manueller Kraftbeaufschlagung das Kupplungsgehäuse unter Umständen schneller als das motorangetriebene Drehteil. Dies führt dann zu einem automatischen Entkuppeln, da bei einem schneller verdrehenden Kupplungsgehäuse das von einer Aufnahmemulde aufgenommene Klemmstück von der Aufnahmemulde freigegeben wird. Ein verwenderseitiger manueller Eingriff führt mithin nicht zu einer Kraftbeaufschlagung der Motoreinheit, sondern zu einem automatischen Entkuppeln, da der Formschluss zwischen Klemmstück, und Kupplungsgehäuse aufgehoben wird, wenn das Kupplungsgehäuse durch den manuellen Verwendereingriff schneller, d.h. mit höherer Drehzahl dreht als das motorangetriebene Drehteil der Kupplung. Ein "Anschieben" der Gerätetür durch den Verwender ist mithin durch die erfindungsgemäße Ausgestaltung abgesichert und führt nicht zu einer Beschädigung weder der Kupplung, noch der Motoreinheit. Damit erweist sich die erfindungsgemäße Konstruktion im alltäglichen Praxiseinsatz als robust und handhabungssicher.

Gemäß einem weiteren Merkmal der Erfindung ist vorgesehen, dass die Kupplungseinrichtung eine zweite Kupplung aufweist, die als Überlastkupplung ausgebildet ist. Diese zweite Kupplung dient insbesondere aus Sicherheitsgründen dem Einklemmschutz und vermeidet eine Türschließung bei einer Blockade der Tür.

Gemäß einem weiteren Merkmal der Erfindung ist vorgesehen, dass die zweite Kupplung ein erstes Kupplungsteil und ein zweites Kupplungsteil aufweist, wobei das zweite Kupplungsteil unter Federvorspannung am ersten Kupplungsteil anliegt. Im Normalfall sind die beiden Kupplungsteile in Wirkverbindung, was dadurch erreicht ist, dass das erste Kupplungsteil feststehend ausgebildet ist und das zweite Kupplungsteil federbelastet gegen das erste Kupplungsteil drückt. Im Betriebsfall wird das von der Motoreinheit bereitgestellte Drehmoment vom ersten Kupplungsteil auf das zweite Kupplungsteil übertragen, so dass in schon vorbeschriebener Weise eine Kraftübertragung von der Motoreinheit auf die zu verdrehende Seiltrommel stattfinden kann.

Kommt es zu einer Blockade der Tür, beispielsweise dadurch, dass ein Körperteil des Verwenders in den Türschlitz zwischen der sich schließenden Tür einerseits und dem Gerätegehäuse andererseits gerät, so arbeitet die Motoreinheit gegen den sich hierdurch ergebenden Widerstand an. Sobald der Widerstand zu hoch ist, reicht die kupplungsseitige Federvorspannung nicht mehr aus, um das zweite Kupplungsteil kraftübertragend an das erste Kupplungsteil anzudrücken. Es kommt unter Kraftunterbrechung zu einem Durchrutschen der Kupplungsteile, was ein weiteres Schließen der Gerätetür mit dem Erfolg unterbindet, dass ein Einklemmen im Türspalt sicher verhindert ist.

Gemäß einem weiteren Merkmal der Erfindung ist vorgesehen, dass das erste Kupplungsteil verdrehfest auf der Abtriebswelle der ersten Kupplung angeordnet ist. Demgemäß ist vorgesehen, dass sich an die Motoreinheit zunächst die erste Kupplung und alsdann die zweite Kupplung anschließt. Alternativ hierzu ist eine umgekehrte Anordnung, dergemäß sich an die Motoreinheit zunächst die zweite Kupplung und alsdann die erste Kupplung anschließt.

Von Vorteil der ersten alternativen Ausgestaltung ist, dass die zweite Kupplung sehr viel sensibler eingestellt und der Widerstand, bei dem es zu einem Durchrutschen der zweiten Kupplung kommt, sehr viel genauer vorgegeben werden kann.

Bei der zweiten Kupplung handelt es sich gemäß einem weiteren Merkmal der Erfindung um eine Klauenkupplung.

Weitere Merkmale und Vorteile der Erfindung ergeben sich aus der nachfolgenden Beschreibung anhand der Figuren. Dabei zeigen
- Fig. 1: in schematisch perspektivischer Darstellung ein erfindungsgemäßes Haushaltsgerät am Beispiel einer Geschirrspülmaschine, wobei sich die Gerätetür in einer teilgeöffneten Stellung befindet;
- Fig. 2: in schematisch perspektivischer Darstellung ausschnittsweise die Geschirrspülmaschine nach Fig. 1 in vollständig geöffneter Stellung;
- Fig. 3: in schematisch perspektivischer Darstellung ausschnittsweise die erfindungsgemäße Geschirrspülmaschine aus einer anderen Blickrichtung und
- Fig. 4: in schematischer Seitenansicht ausschnittsweise die Geschirrspülmaschine nach Fig. 1;
- Fig. 5: in schematisch perspektivischer Darstellung ausschnittsweise die erfindungsgemäße Geschirrspülmaschine aus der Blickrichtung gemäß Fig. 3 in geschlossener Stellung;
- Fig. 6: in schematischer Perspektivdarstellung ausschnittsweise die erste Kupplung der Kupplungseinrichtung;
- Fig. 7: in schematisch perspektivischer Ansicht ausschnittsweise die erste Kupplung der Kupplungseinrichtung;
- Fig. 8: in teilgeschnittener Draufsicht die erste Kupplung der Kupplungseinrichtung;
- Fig. 9: in einer weiteren teilgeschnittenen Draufsicht die Kupplung nach Fig. 8;
- Fig. 10: in teilgeschnittener Ansicht die erste Kupplung in einer ersten Stellung;
- Fig. 11: in einer weiteren teilgeschnittenen Ansicht die Kupplung in der Stellung nach Fig. 10;
- Fig. 12: in teilgeschnittener Ansicht die erste Kupplung in einer zweiten Stellung;
- Fig. 13: in einer weiteren teilgeschnittenen Ansicht die Kupplung in der Stellung nach Fig. 12;
- Fig. 14: in teilgeschnittener Ansicht die erste Kupplung in einer dritten Stellung;
- Fig. 15: in einer weiteren teilgeschnittenen Ansicht die erste Kupplung in der Stellung nach Fig. 14;
- Fig. 16: in schematisch perspektivischer Darstellung die erste Kupplung in einer ersten Stellung;
- Fig. 17: in einer weiteren perspektivischen Darstellung die erste Kupplung in der Stellung nach Fig. 16;
- Fig. 18: in schematisch perspektivischer Darstellung die erste Kupplung in einer zweiten Stellung;
- Fig. 19: in einer weiteren perspektivischen Ansicht die erste Kupplung in der Stellung nach Fig. 18;
- Fig. 20: in einer schematischen Explosionsdarstellung die zweite Kupplung der erfindungsgemäßen Kupplungseinrichtung;
- Fig. 21: in schematisch perspektivischer Darstellung die zweite Kupplung in einer ersten Stellung;
- Fig. 22: in einer schematischen Perspektivdarstellung die zweite Kupplung in einer zweiten Stellung.

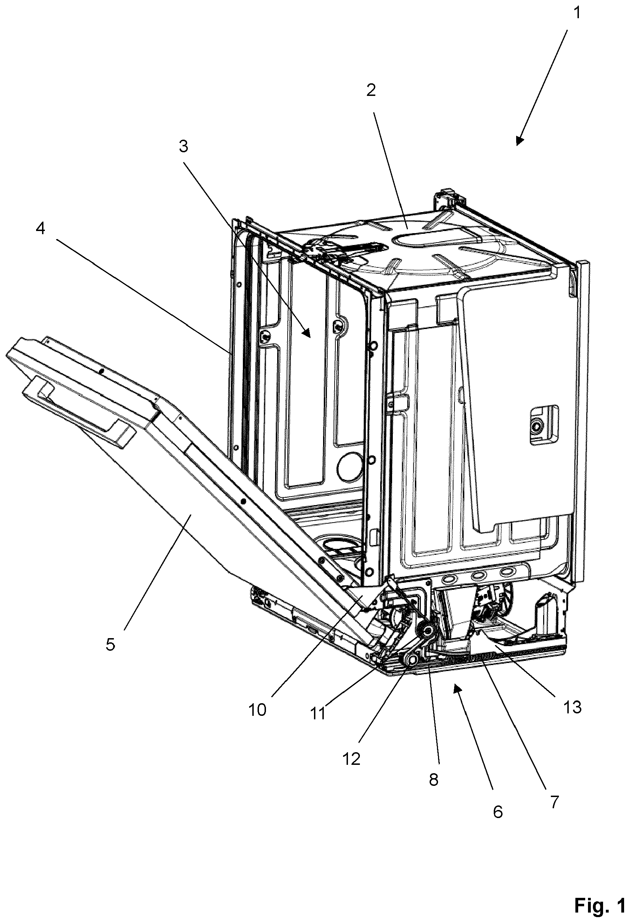

Fig. 1 lässt in schematisch perspektivischer Darstellung ein erfindungsgemäßes Haushaltsgerät am Beispiel einer Geschirrspülmaschine 1 erkennen.

Die Geschirrspülmaschine 1 verfügt über ein in den Figuren nicht näher dargestelltes Außengehäuse, das das Gerätegehäuse 2 beherbergt. Dabei stellt das Gerätegehäuse 2 einen Geräteraum 3 bereit, der über eine Beschickungsöffnung 4 zugänglich ist.

Die Geschirrspülmaschine 1 verfügt des Weiteren über eine um eine Schwenkachse verdrehbar gelagerte Gerätetür 5, die dem Verschluss der Beschickungsöffnung 4 dient.

Dabei kann die Gerätetür 5 aus einer die Beschickungsöffnung 4 verschließenden Verschlussstellung in eine Offenstellung und umgekehrt überführt werden. Fig. 1 zeigt die Gerätetür 5 in einer Offenstellung, in der die Beschickungsöffnung 4 teilgeöffnet ist.

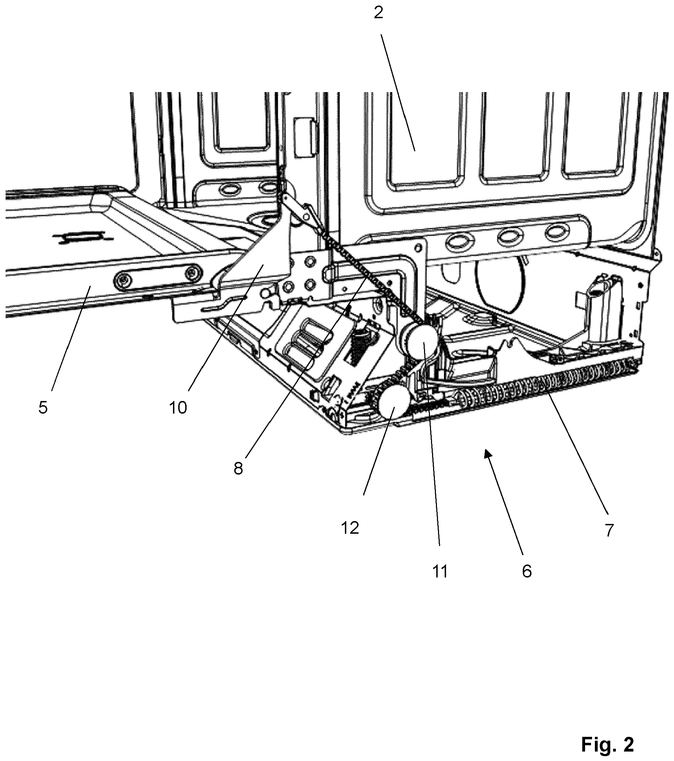

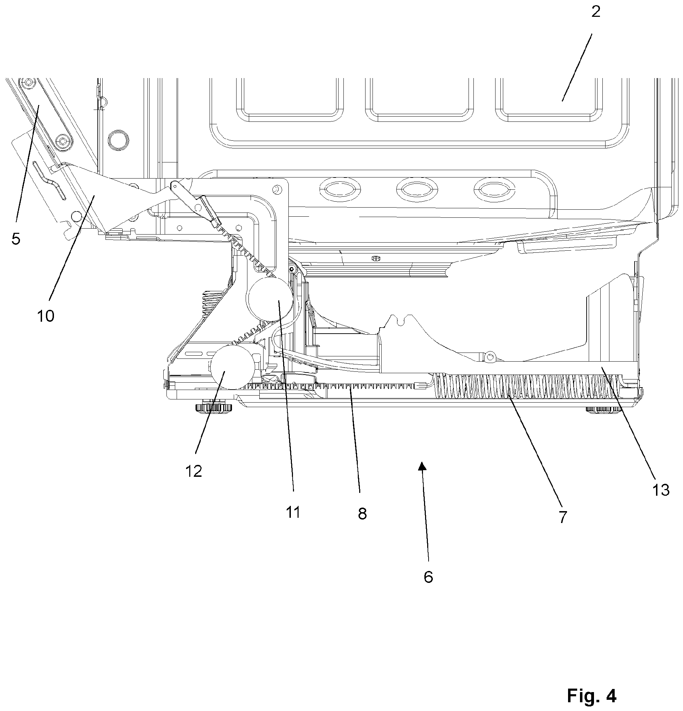

Wie eine Zusammenschau der Figuren 1 bis 4 erkennen lässt, verfügt die Gerätetür 5 schwenkachsennah über einen daran angeordneten Hebel 10. Dabei ist je Seite der Gerätetür 5 ein Hebel 10 vorgesehen.

An einen jeweiligen Hebel 10 ist einendseitig ein Zahnriemen 8 angeordnet, der über ein Zahnrad 11 und eine Umlenkrolle 12 geführt und anderendseitig an einem gegenüber dem Gerätegehäuse 2 stationären Federelement 7 angeordnet ist. Dieses Federelement 7 ist in den Zeichnungen zumindest teilweise durch einen Blechabschnitt 13 abgedeckt.

Bei einer manuellen Öffnung der Gerätetür 5 durch einen Verwender wird der an den Hebeln 10 jeweils angeordnete Zahnriemen 8 auf Zug beansprucht, was zu einem Spannen des anderendseitig am jeweiligen Zahnriemen 8 angeordneten Federelements 7 führt. Es ist so bezüglich der Gerätetür 5 ein Gewichtsausgleich gegeben, womit ein unkontrolliertes Herunterverschwenken der Gerätetür 5 verhindert ist. Die in den Federelementen 7 gespeicherte Kraft wird bei einem Überführen der Gerätetür 5 zurück in die Verschlussstellung wieder freigesetzt, was ein vereinfachtes Schließen der Gerätetür 5 ermöglicht. In ihrer Kombination bilden der Zahnriemen 8 und das Federelement 7 die Federmechanik 6 aus.

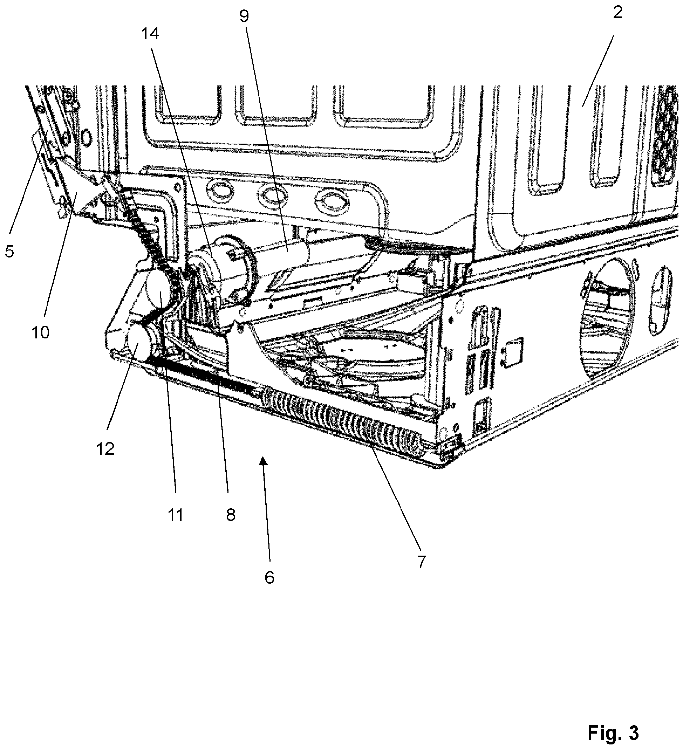

Die Geschirrspülmaschine 1 verfügt des Weiteren über eine Motoreinheit 9, wie sich insbesondere aus der Darstellung nach Fig. 3 ergibt. Diese Motoreinheit 9 steht in Wirkverbindung mit der Gerätetür 5 und gestattet ein motorangetriebenes Verschwenken der Gerätetür 5 aus einer Offenstellung in eine Verschlussstellung.

Im Betriebsfall der Motoreinheit 9 treibt diese unter Zwischenschaltung einer Kupplungseinrichtung 14 das Zahnrad 11 an, das mit dem Zahnriemen 8 formschlüssig in Eingriff steht. Ein motorangetriebenes Verdrehen des Zahnrades 11 führt mithin zu einer Zugbeanspruchung des Zahnriemens 8, infolge dessen es zu einer Kraftbeaufschlagung der Gerätetür 5 mit dem Ergebnis kommt, dass diese im Uhrzeigersinn in Richtung auf die Beschickungsöffnung 4 verdreht. Aufgrund des Formschlusses zwischen Zahnrad 11 und Zahnriemen 8 kann kein Schlupf auftreten, so dass die Gerätetür 5 sicher und unabhängig vom Türgewicht und der Türposition über den gesamten Schwenkbereich bewegt werden kann.

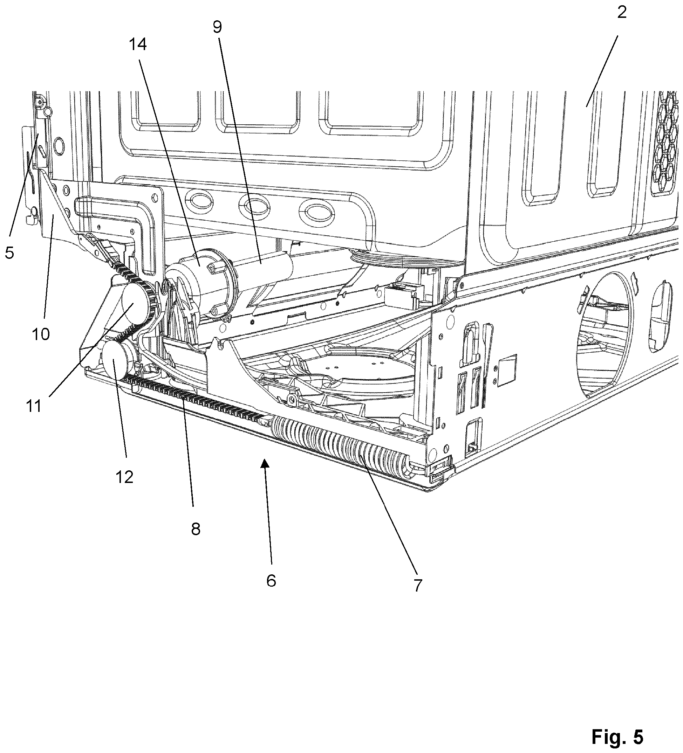

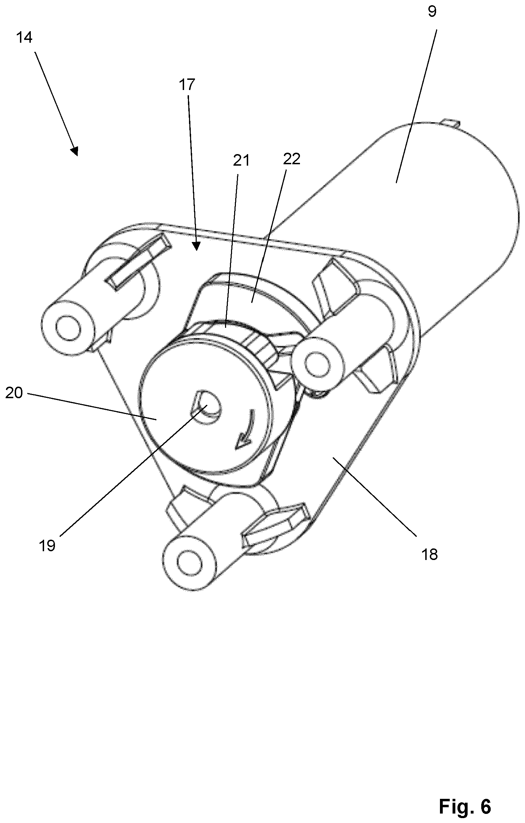

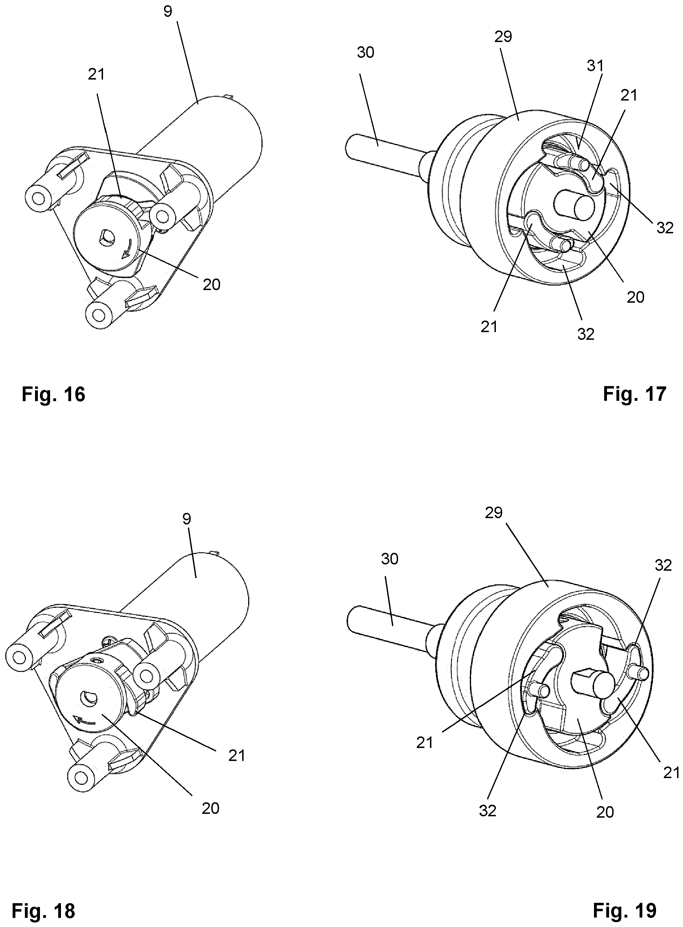

In den Figuren 6 bis 22 wird die Kupplungseinrichtung 14, welche für das in Figuren 1 bis 5 gezeigte Haushaltsgerät eingesetzt werden kann, näher beschrieben. Diese weist eine Kupplung 17 auf, die schaltbar ausgebildet ist und aus einer entkuppelten Stellung in eine gekuppelte Stellung und umgekehrt überführbar ist, wobei die Kupplung 17 eingerichtet ist, im Betriebsfall der Motoreinheit 9 eine automatische Schaltung aus der entkuppelten Stellung in die gekuppelte Stellung zu bewirken.

Wie dies beispielsweise Fig. 6 erkennen lässt, verfügt die Kupplung 17 antriebsseitig über eine Motorplatte 18, an welcher die Motoreinheit 9 beispielsweise durch Verschraubung angeordnet ist. Die Motoreinheit 9 verfügt über eine Motorwelle 19, die eine entsprechende Öffnung in der Motorplatte 18 durchragt. Auf der Motorwelle 19 ist verdrehfest ein Drehteil 20 angeordnet. Dieses verdreht im Betriebsfall der Motoreinheit 9 in Entsprechung einer Verdrehbewegung der Motorwelle 19.

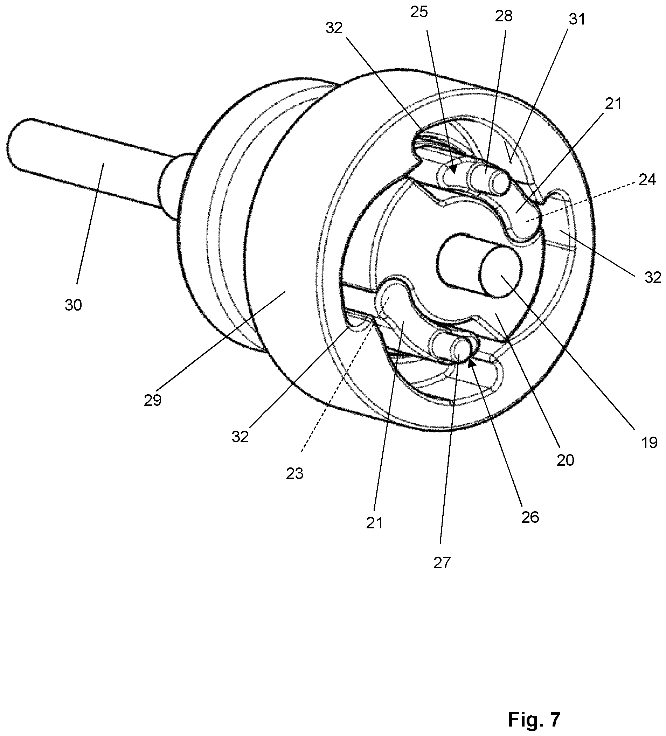

Fig. 7 lässt eine rückwärtige Ansicht des Drehteils 20 erkennen. Wie sich aus dieser Darstellung ergibt, sind am Drehteil 20 zwei Klemmstücke 21 angeordnet, und zwar verdrehbar. Dabei ist das eine Klemmstück 21 um eine Schwenkachse 23 und das andere Klemmstück 21 um eine Schwenkachse 24 jeweils relativ verschwenkbar zum Drehteil 20 am Drehteil 20 angeordnet. Anstelle der beiden gezeigten Klemmstücke 21 können alternativ auch mehr Klemmstücke 21 vorgesehen sein.

Wie sich dies insbesondere aus einer Zusammenschau der Figuren 6, 8 und 9 ergibt, verfügt die Kupplung 17 des Weiteren über ein Führungsmittel 22. Dieses stellt zwei Kulissenführungen 34 und 35 bereit.

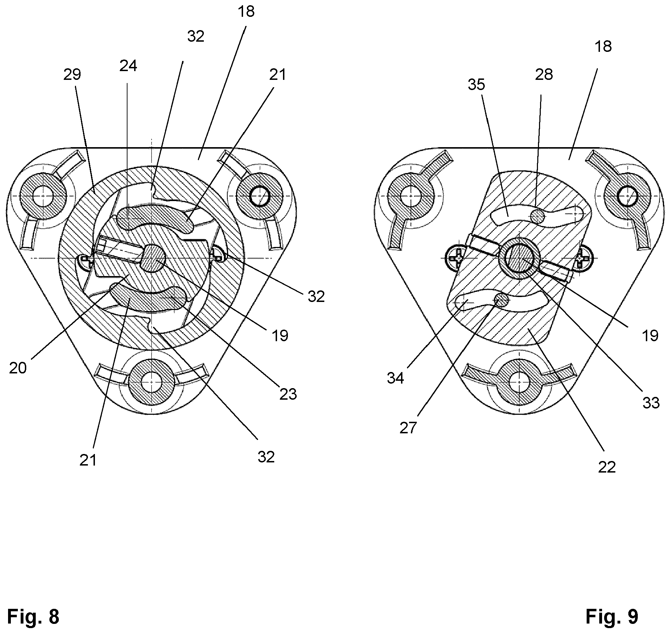

Die Klemmstücke 21 des Drehteils 20 verfügen jeweils über Zapfen 27 bzw. 28, die im jeweiligen schwenkachsenentfernten Endabschnitt 25 bzw. 26 angeordnet sind, wie dies insbesondere die Darstellung nach Fig. 7 erkennen lässt. Im zusammengebauten Zustand der Kupplung 17 greifen diese Zapfen 27 bzw. 28 in die jeweils zugeordneten Führungskulissen 34 und 35 ein, wie dies insbesondere Fig. 9 erkennen lässt.

Das Führungsmittel 22 ist auf einem von der Motorwelle 19 durchragten Lagerbund 33 verdrehbar gelagert, und zwar unter Ausbildung eines Reibsitzes. Eine Verdrehbewegung des Führungsmittel 22 findet mithin erst dann statt, wenn eine solche Verdrehkraft auf das Führungsmittel 22 einwirkt, die die zwischen Führungsmittel 22 und Lagerbund 33 bestehende Reibung bzw. die dadurch verursachte Reibkraft übersteigt.

Aus Fig. 7 ergibt sich des Weiteren, dass die Kupplung 17 über ein Kupplungsgehäuse 29 verfügt. Dieses Kupplungsgehäuse 29 nimmt das Drehteil 20 mit den daran angeordneten Klemmstücken 21 auf.

Das Kupplungsgehäuse 29 stellt eine Innenkontur 31 bereit, die mit den Klemmstücken 21 zusammenwirkt. Dabei weist die Innenkontur 31 zu den schwenkachsenentfernten Endabschnitten 25 und 26 der Klemmstücke 21 korrespondierend ausgebildete Aufnahmemulden 32 auf. In diese Aufnahmemulden 32 können, wie dies im Weiteren noch näher beschrieben werden wird, die Klemmstücke 21 eintauchen.

Abtriebsseitig ist am Kupplungsgehäuse 29 eine Abtriebswelle 30 angeordnet, wie dies ebenfalls Fig. 7 erkennen lässt. Diese Abtriebswelle 30 steht in Wirkverbindung mit dem Zwischenglied, etwa dem Zahnrad 11.

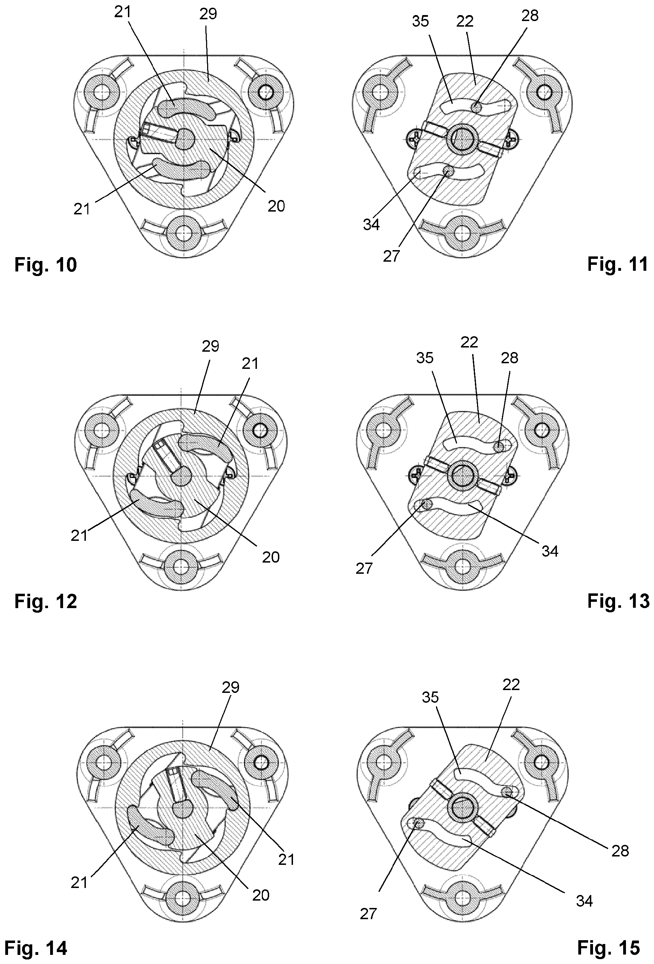

Die Funktionsweise der vorbeschriebenen Kupplung 17 ergibt sich aus einer Zusammenschau der Figuren 10 bis 19.

Die Figuren 10, 11 und 16 sowie 17 zeigen die Kupplung 17 in entkuppelter, d.h. ausgekuppelter Stellung. In dieser Stellung ist das Kupplungsgehäuse 29 gegenüber dem Drehteil 20 frei verdrehbar. In dieser Stellung der Kupplung 17 erfolgt eine manuelle Betätigung der Gerätetür 5. Dabei kann die Gerätetür 5 sowohl geöffnet als auch geschlossen werden. Die Wirkverbindung zwischen Kupplungsgehäuse 29 und dem Zwischenglied, etwa dem Zahnrad 11, bewirkt bei einem manuellen Verfahren der Gerätetür, dass das Kupplungsgehäuse 29 in Relation zum Drehteil 20 verdreht.

Sofern sich die Gerätetür 5 in geöffneter Stellung befindet und ein Verschließen der Gerätetür 5 mittels der Motoreinheit 9 erfolgen soll, ist die Motoreinheit 9 verwenderseitig zu starten. Infolge eines Starts der Motoreinheit 9 verdreht die Motorwelle 19 und damit auch das darauf verdrehfest angebrachte Drehteil 20. Infolge einer Verdrehbewegung des Drehteils 20 verdrehen auch die Klemmstücke 21 zusammen mit dem Drehteil, d.h. um die von der Motorwelle 19 bereitgestellte Drehachse.

Da die Klemmstücke 21 mit ihren schwenkachsenentfernten Endabschnitten 25 bzw. 26 jeweils unter Zwischenordnung der jeweiligen Zapfen 27 bzw. 28 in den Kulissenführungen 34 und 35 des Führungsmittels 22 gehalten sind, wird durch die Verdrehbewegung des Drehteils 20 die jeweilige Verdrehbewegung der Klemmstücke 21 erreicht, und zwar relativ zum Drehteil 20 um die jeweiligen Drehachsen 23 und 24. Diesen Sachzusammenhang lassen die Figuren 12 und 13 erkennen. Während dieses Anfahrvorgangs verdreht das Führungsmittel 22 noch nicht, da dieses aufgrund ihres Reibsitzes noch feststehend auf dem Lagerbund 33 gehalten ist.

Sobald die Klemmstücke 21 ihre verdrehte Endposition in Relation zum Drehteil 20 erreicht haben, greifen sie mit ihren Endabschnitten 25 bzw. 26 in entsprechende Aufnahmemulden 32 der Innenkontur 31 des Kupplungsgehäuses 29 ein, wie dies die Figuren 14 und 15 bzw. 18 und 19 erkennen lassen. In dieser Position ist eine kraftübertragende Kupplung zwischen dem Drehteil 20 und dem Kupplungsgehäuse 29 erreicht. Die Kupplung 17 ist mithin eingekuppelt bzw. gekuppelt, so dass eine Drehmomentübertragung vom motorangetriebenen Drehteil 20 auf das Kupplungsgehäuse 29 und damit auf die Abtriebswelle 30 stattfinden kann. Im Ergebnis erfolgt ein motorangetriebenes Verdrehen des Zahnrades 11 mit dem Effekt, dass ein motorangetriebenes Schließen der Gerätetür 5 stattfindet.

Von besonderem Vorteil der vorbeschriebenen Konstruktion ist, dass es für ein Einkuppeln der Kupplung 17 keiner besonderen Aktorik bedarf. Das Einkuppeln erfolgt automatisch bei Betriebsaufnahme der Motoreinheit 9. Sobald also die Motoreinheit 9 startet, erfolgt in vorbeschriebener Weise eine Verdrehbewegung des Drehteils 20, was dann im Weiteren zu einem formschlüssigen Eingriff der Klemmstücke 21 in die zugehörigen Aufnahmemulden 32 führt.

Von Vorteil der vorbeschriebenen Kupplung 17 ist des Weiteren, dass eine manuelle Nachführung der Gerätetür, d.h. ein verwenderseitiges Anschieben der Gerätetür 5 nach wie vor möglich ist. Denn sollte trotz Motorbetrieb ein manuelles Nachführen der Gerätetür 5 stattfinden, so verdreht das Kupplungsgehäuse 29 im Uhrzeigersinn durch den manuellen Eingriff schneller als das motorangetriebene Drehteil 20. In der Konsequenz klinken die Klemmstücke 21 aus den jeweils zugehörigen Aufnahmemulden 32 aus. Eine zusätzliche Kraft bzw. Drehmomentbelastung der Kupplung 17 oder der Motoreinheit 9 durch ein manuelles Anschieben der Gerätetür 5 ist also unterbunden. Sollte dann im Weiteren eine manuelle Unterstützung wieder wegfallen, greifen die Klemmstücke 31 erneut in jeweils zugehörige Aufnahmemulden 32 ein, so dass ein fortgesetzter Motorbetrieb stattfinden kann.

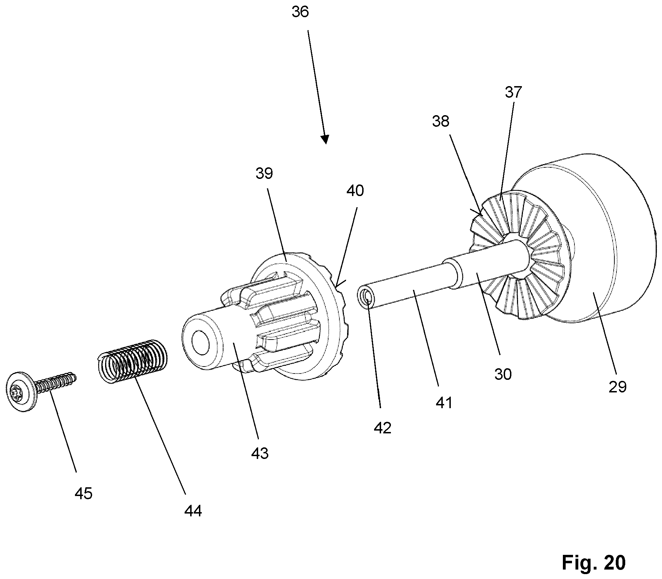

Die Kupplungseinrichtung 14 verfügt bevorzugterweise über eine zweite Kupplung in Form einer Klauenkupplung 36, wie dies eine Zusammenschau der Figuren 20 bis 22 erkennen lässt. Dabei dient die Klauenkupplung 36 als Rutschkupplung und soll insbesondere für den Fall einer Türblockade eine mechanische Unterbrechung des Antriebsstrangs sicherstellen.

Die Klauenkupplung 36 verfügt über ein erstes Kupplungsteil 37 und ein zweites Kupplungsteil 39, die jeweils entsprechende Wirkoberflächen 38 und 40 bereitstellen. Das erste Kupplungsteil 37 ist verdrehfest auf der Antriebswelle 30 angeordnet. Bei einer Verdrehbewegung des Kupplungsgehäuses 29 verdreht mithin auch das erste Kupplungsteil 37 der Klauenkupplung 36.

Auf der Abtriebswelle 30 verdrehbar gelagert ist ein Verzahnungsteil 43 angeordnet, das einstückig damit ausgebildet das zweite Kupplungsteil 39 bereitstellt.

An die Abtriebswelle 30 schließt sich ein Hülsenfortsatz 41 an, der stirnseitig eine Gewindebohrung 42 bereitstellt. Im endmontierten Zustand greift in diese Gewindebohrung 42 eine Schraube 45 ein, an der sich eine gegen das Verzahnungsteil 43 drückende Feder 44 abstützt.

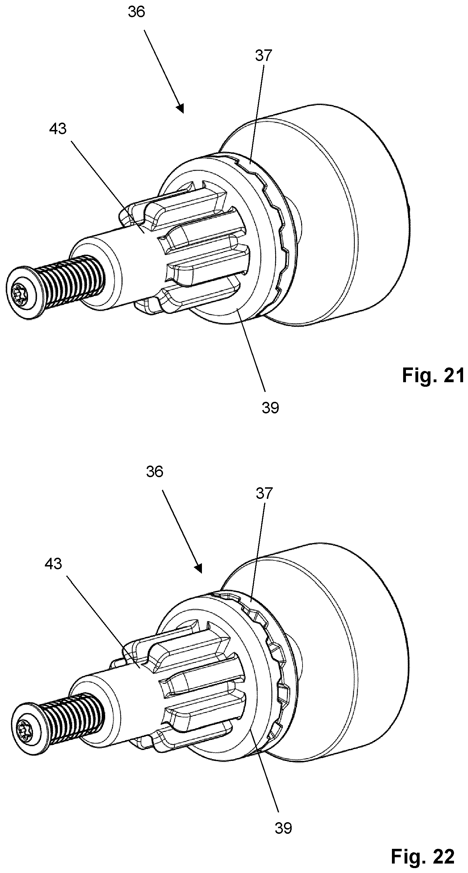

Im normalen Betriebsfall greifen die Wirkoberflächen 38 und 40 der Kupplungsteile 37 und 39 ineinander, wie in Fig. 21 dargestellt. Dabei steht das das zweite Kupplungsteil 39 bereitstellende Verzahnungsteil 43 unter Federvorspannung, wird mithin gegen das erste Kupplungsteil 37 gedrückt.

Das Verzahnungsteil 43 dient entweder selbst als Zahnrad 11 zur Aufnahme des Zahnriemens 8 oder als Koppelelement zur Aufnahme eines separat ausgebildeten Zahnrades 11. In jedem Fall wirkt bei einer blockierten Gerätetür 5 über. den Zahnriemen 8 eine Gegenkraft auf das Verzahnungsteil 43 ein. Ist diese Gegenkraft größer als die durch die Feder 44 bereitgestellte Zusammendrückkraft der beiden Kupplungsteile 37 und 39, so kommt es zu einem Durchrutschen der Klauenkupplung 36, indem die Kupplungsteile 37 und 39 außer Eingriff kommen, wie dies in Fig. 22 dargestellt ist. Der Abtriebsstrang zwischen Motoreinheit 9 und. Zahnrad 11 ist insofern unterbrochen, so dass trotz eines Betriebs der Motoreinheit 9 eine Verdrehbewegung des Zahnrades 11 unterbleibt.

### Bezugszeichen

- 1: Haushaltsgerät, insbesondere Geschirrspülmaschine
- 2: Gerätegehäuse
- 3: Geräteraum
- 4: Beschickungsöffnung
- 5: Gerätetür
- 6: Federmechanik
- 7: Federelement
- 8: Zahnriemen
- 9: Motoreinheit
- 10: Hebel
- 11: Zahnrad
- 12: Umlenkrolle
- 13: Blechabschnitt
- 14: Kupplungseinrichtung

- 17: Kupplung
- 18: Motorplatte
- 19: Motorwelle
- 20: Drehteil
- 21: Klemmstück
- 22: Führungsmittel
- 23: Schwenkachse
- 24: Schwenkachse
- 25: Endabschnitt
- 26: Endabschnitt
- 27: Zapfen
- 28: Zapfen
- 29: Kupplungsgehäuse
- 30: Abtriebswelle
- 31: Innenkontur
- 32: Aufnahmemulde
- 33: Lagerbund
- 34: Kulissenführung
- 35: Kulissenführung
- 36: Klauenkupplung
- 37: erstes Kupplungsteil
- 38: Wirkoberfläche
- 39: zweites Kupplungsteil
- 40: Wirkoberfläche
- 41: Hülsenfortsatz
- 42: Gewindebohrung
- 43: Verzahnungsteil
- 44: Feder
- 45: Schraube

## Patentansprüche

1. Haushaltsgerät, insbesondere wasserführendes Haushaltsgerät mit einem einen Geräteraum (3) bereitstellenden Gerätegehäuse (2), das für einen Zugriff auf den Geräteraum (3) eine Beschickungsöffnung (4) aufweist, mit einer um eine Schwenkachse verdrehbar gelagerten Gerätetür (5) für einen Verschluss der Beschickungsöffnung (4), mit einer Motoreinheit (9), mittels welcher die Gerätetür (5) aus einer Offenstellung in eine die Beschickungsöffnung (4) verschließende Verschlussstellung überführbar ist, und mit einer Federmechanik (6), die einem Gewichtsausgleich der Gerätetür (5) dient und ein Federelement (7) sowie ein zwischen Federelement (7) und Gerätetür (5) angeordnetes Kraftübertragungsmittel aufweist, das mit einem von der Motoreinheit (9) antreibbaren Zwischenglied in Wirkverbindung steht,
**dadurch gekennzeichnet,**
**dass** das Kraftübertragungsmittel ein Zahnriemen (8) oder eine Kette ist,
wobei der Zahnriemen (8) oder die Kette und das Zwischenglied formschlüssig ineinandergreifen.

2. Haushaltsgerät nach Anspruch 1,
**dadurch gekennzeichnet,**
**dass** das Zwischenglied ein zum Zahnriemen (8) oder zur Kette korrespondierend ausgebildetes Zahnrad (11) ist.

3. Haushaltsgerät nach Anspruch 1 oder 2, **dadurch gekennzeichnet, dass** der Zahnriemen (8) oder die Kette das Federelement (7) mit einem Anlenkhebel (10) der Gerätetür (5) unmittelbar verbindet.

4. Haushaltsgerät nach einem der vorhergehenden Ansprüche,
**gekennzeichnet**
**durch** eine zwischen der Motoreinheit (9) und der Gerätetür (5) angeordnete Kupplungseinrichtung (14), die antriebsseitig mit der Motoreinheit (9) und abtriebsseitig mit der Gerätetür (5) in Wirkverbindung steht.

5. Haushaltsgerät nach Anspruch 4,
**dadurch gekennzeichnet,**
**dass** die Kupplungseinrichtung (14) eine Kupplung (17) aufweist, die schaltbar ausgebildet ist und aus einer entkuppelten Stellung in eine gekuppelte Stellung und umgekehrt überführbar ist, wobei die Kupplung (17) eingerichtet ist, im Betriebsfall der Motoreinheit (9) eine automatische Schaltung aus der entkuppelten Stellung in die gekuppelte Stellung zu bewirken.

6. Haushaltsgerät nach Anspruch 5,
**dadurch gekennzeichnet,**
**dass** die Kupplung (17) ein verdrehfest auf einer Motorwelle der Motoreinheit (9) angeordnetes Drehteil (20) aufweist, das ein um eine Schwenkachse (23, 24) verdrehbar daran angeordnetes Klemmstück (21) trägt.

7. Haushaltsgerät nach Anspruch 6,
**dadurch gekennzeichnet,**
**dass** das Klemmstück (21) mit einem schwenkachsenentfernten Endabschnitt (25, 26) mit einer von einem Führungsmittel (22) bereitgestellten Kulissenführung (34, 35) zusammenwirkt.

8. Haushaltsgerät nach einem der vorhergehenden Ansprüche 5 bis 7,
**dadurch gekennzeichnet,**
**dass** die Kupplung (17) ein das Drehteil (20) zumindest teilweise aufnehmendes Kupplungsgehäuse (29) aufweist, das eine mit dem Klemmstück (21) zusammenwirkende Innenkontur (31) aufweist.

9. Haushaltsgerät nach Anspruch 8,
**dadurch gekennzeichnet,**
**dass** die Innenkontur (31) eine zum schwenkachsenentfernten Endabschnitt (25, 26) des Klemmstücks (21) korrespondierend ausgebildete Aufnahmemulde (32) aufweist.

10. Haushaltsgerät nach Anspruch 8 oder 9,
**dadurch gekennzeichnet,**
**dass** das Kupplungsgehäuse (29) eine Abtriebswelle (30) bereitstellt.

11. Haushaltsgerät nach einem der vorhergehenden Ansprüche 4 bis 10,
**dadurch gekennzeichnet,**
**dass** die Kupplungseinrichtung (14) eine zweite Kupplung aufweist, die als Überlastkupplung ausgebildet ist.

12. Haushaltsgerät nach Anspruch 11,
**dadurch gekennzeichnet,**
**dass** die zweite Kupplung ein erstes Kupplungsteil (37) und ein zweites Kupplungsteil (39) aufweist, wobei das zweite Kupplungsteil (39) unter Federvorspannung am ersten Kupplungsteil (37) anliegt.

13. Haushaltsgerät nach Anspruch 12,
**dadurch gekennzeichnet,**
**dass** das erste Kupplungsteil (37) verdrehfest auf der Abtriebswelle (30) der ersten Kupplung (17) angeordnet ist.

14. Haushaltsgerät nach einem der vorhergehenden Ansprüche 11 bis 13,
**dadurch gekennzeichnet,**
**dass** die zweite Kupplung eine Klauenkupplung (36) ist.

## Claims

1. Household appliance, in particular a water-conducting household appliance, having an appliance housing (2) providing an appliance space (3), which appliance housing has a loading opening (4) for access to the appliance space (3), having an appliance door (5) mounted so as to be rotatable about a pivot axis for closing the loading opening (4), having a motor unit (9) by means of which the appliance door (5) can be transferred from an open position to a closed position closing the loading opening (4), and having a spring mechanism (6), which is used to balance the weight of the appliance door (5) and has a spring element (7) and a force transmission means arranged between the spring element (7) and the appliance door (5), which force transmission means is in operative connection with an intermediate member that can be driven by the motor unit (9),
**characterized in that**
the force transmission means is a toothed belt (8) or a chain,
wherein the toothed belt (8) or the chain and the intermediate member interlock in a form-fitting manner.

2. Household appliance according to Claim 1,
**characterized in that**
the intermediate member is a gear wheel (11) that is designed to correspond to the toothed belt (8) or to the chain.

3. Household appliance according to Claims 1 or 2, **characterized in that** the toothed belt (8) or the chain directly connects the spring element (7) to a linkage lever (10) of the appliance door (5).

4. Household appliance according to any one of the preceding claims,
**characterized by**
a coupling device (14) arranged between the motor unit (9) and the appliance door (5), which coupling device is operatively connected on the drive side to the motor unit (9) and to the appliance door (5) on the output side.

5. Household appliance according to Claim 4,
**characterized in that**
the coupling device (14) has a coupling (17) that is designed to be switchable and can be transferred from a decoupled position to a coupled position and vice versa,
wherein the coupling (17) is configured to bring about automatic switching from the uncoupled position to the coupled position during operation of the motor unit (9).

6. Household appliance according to Claim 5,
**characterized in that**
the coupling (17) has a rotary part (20) that is arranged in a rotationally fixed manner on a motor shaft of the motor unit (9) and that carries a clamping piece (21) arranged thereon so as to be rotatable about a pivot axis (23, 24).

7. Household appliance according to Claim 6,
**characterized in that**
the clamping piece (21) interacts with an end portion (25, 26) remote from the pivot axis, which end portion has a sliding block guide (34, 35) provided by a guide means (22).

8. Household appliance according to any one of the preceding Claims 5 to 7,
**characterized in that**
the coupling (17) has a coupling housing (29) that at least partially receives the rotary part (20) and has an inner contour (31) that interacts with the clamping piece (21).

9. Household appliance according to Claim 8,
**characterized in that**
the inner contour (31) has a receiving trough (32) that is designed to correspond to the end portion (25, 26) of the clamping piece (21), which end portion is remote from the pivot axis.

10. Household appliance according to Claims 8 or 9,
**characterized in that**
the coupling housing (29) provides an output shaft (30).

11. Household appliance according to any one of the preceding Claims 4 to 10, **characterized in that**
the coupling device (14) has a second coupling that is designed as an overload coupling.

12. Household appliance according to Claim 11,
**characterized in that**
the second coupling has a first coupling part (37) and a second coupling part (39), wherein the second coupling part (39) abuts the first coupling part (37) under spring pretension.

13. Household appliance according to Claim 12,
**characterized in that**
the first coupling part (37) is arranged in a rotationally fixed manner on the output shaft (30) of the first coupling (17).

14. Household appliance according to any one of the preceding Claims 11 to 13,
**characterized in that**
the second coupling is a claw coupling (36).

## Revendications

1. Appareil électroménager, en particulier appareil électroménager à circulation d'eau, comportant un boîtier d'appareil (2) fournissant un espace d'appareil (3), lequel boîtier d'appareil présente une ouverture de chargement (4) pour accéder à l'espace d'appareil (3), comportant une porte d'appareil (5) montée de manière à pouvoir tourner autour d'un axe de pivotement pour une fermeture de l'ouverture de chargement (4), comportant un groupe moteur (9), au moyen duquel la porte d'appareil (5) peut être transférée d'une position d'ouverture à une position de fermeture fermant l'ouverture de chargement (4), et comportant un mécanisme à ressort (6) qui sert à un équilibrage du poids de la porte d'appareil (5) et présente un élément formant ressort (7) ainsi qu'un moyen de transmission de force disposé entre l'élément formant ressort (7) et la porte d'appareil (5), lequel moyen est en liaison active avec un organe intermédiaire pouvant être entraîné par le groupe moteur (9),
**caractérisé en ce**
**que** le moyen de transmission de force est une courroie dentée (8) ou une chaîne,
dans lequel la courroie dentée (8) ou la chaîne et l'organe intermédiaire viennent en prise l'un dans l'autre par complémentarité de forme.

2. Appareil électroménager selon la revendication 1,
**caractérisé en ce**
**que** l'organe intermédiaire est une roue dentée (11) réalisée de manière à correspondre à la courroie dentée (8) ou à la chaîne.

3. Appareil électroménager selon la revendication 1 ou 2,
**caractérisé en ce que** la courroie dentée (8) ou la chaîne relie directement l'élément formant ressort (7) à un levier d'articulation (10) de la porte d'appareil (5).

4. Appareil électroménager selon l'une des revendications précédentes,
**caractérisé**
**par** un dispositif d'accouplement (14) disposé entre le groupe moteur (9) et la porte d'appareil (5), lequel dispositif d'accouplement est en liaison active avec le groupe moteur (9) côté entraînement et avec la porte d'appareil (5) côté sortie.

5. Appareil électroménager selon la revendication 4,
**caractérisé en ce**
**que** le dispositif d'accouplement (14) présente un accouplement (17) qui est réalisé de manière à pouvoir être commuté et peut être transféré d'une position désaccouplée à une position accouplée et inversement, dans lequel l'accouplement (17) est conçu pour provoquer une commutation automatique de la position désaccouplée à la position accouplée lorsque le groupe moteur (9) est en cours de fonctionnement.

6. Appareil électroménager selon la revendication 5,
**caractérisé en ce**
**que** l'accouplement (17) présente une partie rotative (20) disposée de manière solidaire en rotation sur un arbre de moteur du groupe moteur (9), laquelle partie rotative supporte une pièce de serrage (21) disposée sur celle-ci de manière à pouvoir tourner autour d'un axe de pivotement (23, 24).

7. Appareil électroménager selon la revendication 6,
**caractérisé en ce**
**que** la pièce de serrage (21) coopère, avec une section d'extrémité (25, 26) éloignée de l'axe de pivotement, avec un guide de coulisse (34, 35) fourni par un moyen de guidage (22).

8. Appareil électroménager selon l'une des revendications précédentes 5 à 7,
**caractérisé en ce**
**que** l'accouplement (17) présente un boîtier d'accouplement (29) recevant au moins partiellement la partie rotative (20), lequel boîtier d'accouplement présente un contour intérieur (31) coopérant avec la pièce de serrage (21).

9. Appareil électroménager selon la revendication 8,
**caractérisé en ce**
**que** le contour intérieur (31) présente une cavité de réception (32) réalisée de manière à correspondre à la section d'extrémité (25, 26) éloignée de l'axe de pivotement de la pièce de serrage (21).

10. Appareil électroménager selon la revendication 8 ou 9,
**caractérisé en ce**
**que** le boîtier d'accouplement (29) fournit un arbre de sortie (30).

11. Appareil électroménager selon l'une des revendications précédentes 4 à 10,
**caractérisé en ce**
**que** le dispositif d'accouplement (14) présente un second accouplement qui est réalisé comme un accouplement de surcharge.

12. Appareil électroménager selon la revendication 11,
**caractérisé en ce**
**que** le second accouplement présente une première partie d'accouplement (37) et une seconde partie d'accouplement (39), dans lequel la seconde partie d'accouplement (39) s'appuie sur la première partie d'accouplement (37) sous précontrainte de ressort.

13. Appareil électroménager selon la revendication 12,
**caractérisé en ce**
**que** la première partie d'accouplement (37) est disposée de manière solidaire en rotation sur l'arbre de sortie (30) du premier accouplement (17).

14. Appareil électroménager selon l'une des revendications précédentes 11 à 13,
**caractérisé en ce**
**que** le second accouplement est un accouplement à griffes (36).
